(19) **Europäisches Patentamt / European Patent Office / Office européen des brevets**

(11) **EP 4 727 116 A1**

(12) **EUROPEAN PATENT APPLICATION**

(43) Date of publication:
**15.04.2026  Bulletin 2026/16**

(21) Application number: **24306651.1**

(22) Date of filing: **09.10.2024**

(51) International Patent Classification (IPC):
**H04N 19/105** *(2014.01)*  **H04N 19/11** *(2014.01)*
**H04N 19/176** *(2014.01)*  **H04N 19/513** *(2014.01)*
**H04N 19/53** *(2014.01)*  **H04N 19/593** *(2014.01)*

(52) Cooperative Patent Classification (CPC):
**H04N 19/513; H04N 19/105; H04N 19/11;
H04N 19/176; H04N 19/53; H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
- **RADOSAVLJEVIC, Milos
  35000 RENNES (FR)**
- **NASER, Karam
  35250 MOUAZE (FR)**
- **CHEN, Ya
  35700 RENNES (FR)**
- **LE LEANNEC, Fabrice
  35830 BETTON (FR)**

(74) Representative: **Vossius & Partner
Patentanwälte Rechtsanwälte mbB
Siebertstraße 3
81675 München (DE)**

(54) **MULTI-PASS REGION MERGING**

(57)  A device (e.g., a video encoding and/or decoding device) may obtain block vector candidates for a video block. Each block vector candidate may be associated with a refinement region. The device may identify, among the block vector candidates, a cluster of block vector candidates having overlapping refinement regions. The device may calculate a combined block vector candidate based on the cluster of block vector candidates. For example, a mean block vector of the cluster of block vector candidates may be calculated and used as the combined block vector. The device may determine an updated refinement region for the combined block vector candidate. The device may process (e.g., decode and/or encode) the video block based on the updated refinement region and the combined block vector candidate.

Refinement windows

BV-1
BV-2
BV-3

Current block

**FIG. 10**

EP 4 727 116 A1

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**SUMMARY**

Systems, methods, and instrumentalities are disclosed for multi-pass region merging. A device (e.g., a video encoding and/or decoding device) may be configured to obtain, for a video block, block vector candidates. A block vector candidate may be associated with a refinement region. The device may identify, among the block vector candidates, a cluster of block vector candidates having overlapping refinement regions. The device may calculate a combined block vector candidate based on the cluster of block vector candidates. The device may determine an updated refinement region for the combined block vector candidate. The device may process (e.g., decode and/or encode) the video block based on the updated refinement region and the combined block vector candidate.

The device may calculate a mean block vector of the cluster of block vector candidates. The combined block vector candidate may be the mean block vector of the cluster of block vector candidates. The device may determine a center of mass of the cluster of block vector candidates, and the mean block vector may be determined based on the determined center of mass of the cluster of block vector candidates.

The device may determine a size of the updated refinement region based on a quantity of the block vector candidates in the cluster. The updated refinement region may be determined based on the size of the updated refinement region. The device may determine a size of the updated refinement region based on a scaling factor and a number of the block vector candidates in the cluster. The updated refinement region may be determined based on the size of the updated refinement region.

The device may determine a candidate refinement region size associated with a block vector candidate from the cluster of block vector candidates, and the updated refinement region may be determined based on the determined candidate refinement region size.

The device may refine the combined block vector candidate based on the updated refinement region. The device may include the refined combined block vector candidate in a block vector candidate list, and the video block may be processed (e.g., decoded and/or encoded) based on the block vector candidate list.

The combined block vector candidate may be a first combined block vector candidate. The device may determine that the updated refinement region for the combined block vector candidate overlaps with a refinement region of a block vector candidate outside of the cluster of block vector candidates. The device may calculate a second combined block vector candidate based on the first combined block vector candidate and the block vector candidate outside of the cluster of block vector candidates. The device may determine a second updated refinement region for the second combined block vector candidate. The video block may be processed (e.g., decoded and/or encoded) based on the second combined block vector candidate and the second updated refinement region.

The combined block vector candidate may be a first combined block vector candidate. The device may identify, among the block vector candidates, a second cluster of block vector candidates having refinement regions that overlap the updated refinement region of first the combined block vector candidate. The device may calculate a second combined block vector candidate based on the cluster of block vector candidates and a second cluster of block vector candidates. The device may determine a second updated refinement region for the second block vector candidate. The device may refine the combined block vector candidate based on the second updated refinement region. The device may include the refined combined block vector candidate in a block vector candidate list, and the video block may be processed (e.g., decoded and/or encoded) based on the block vector candidate list.

The device may determine a first overlapping refinement region of a first block vector candidate from the cluster and a second block vector candidate from the cluster. The device may determine a second overlapping refinement region of the second block vector candidate and a third block vector candidate from the cluster. The device may weight the first block vector candidate based on the first overlapping refinement region, the second block vector candidate based on the first overlapping refinement region and the second overlapping refinement region, and the third block vector candidate based on the second overlapping refinement region. The combined block vector candidate may be calculated based on the weighted first block vector candidate, the weighted second block vector candidate, and the weighted third block vector candidate.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows an example intra template matching search area used.
FIG. 5 shows an example sparse search and refinement in an example intra template matching prediction (ITMP) search process.
FIG. 6 shows an example workflow of an ITMP process.
FIG. 7 shows an example of an ITMP auto relocated block vector prediction's (ITMP-AR-BVP) construction.
FIG. 8 shows an example of five positions in a reference block.
FIG. 9. Shows an example of refinement window overlapping.
FIG. 10 shows an example of merging overlapping block vector (BV) candidates.
FIG. 11 shows an example of merging overlapping candidates.
FIG. 12 shows an example of merging overlapping BV candidates.
FIG. 13 shows an example of merging overlapping BV candidates.
FIG. 14 shows an example of overlapping after merging two candidates.
FIG. 15 shows an example of a refinement region after enlargement and overlapping with BV-4.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

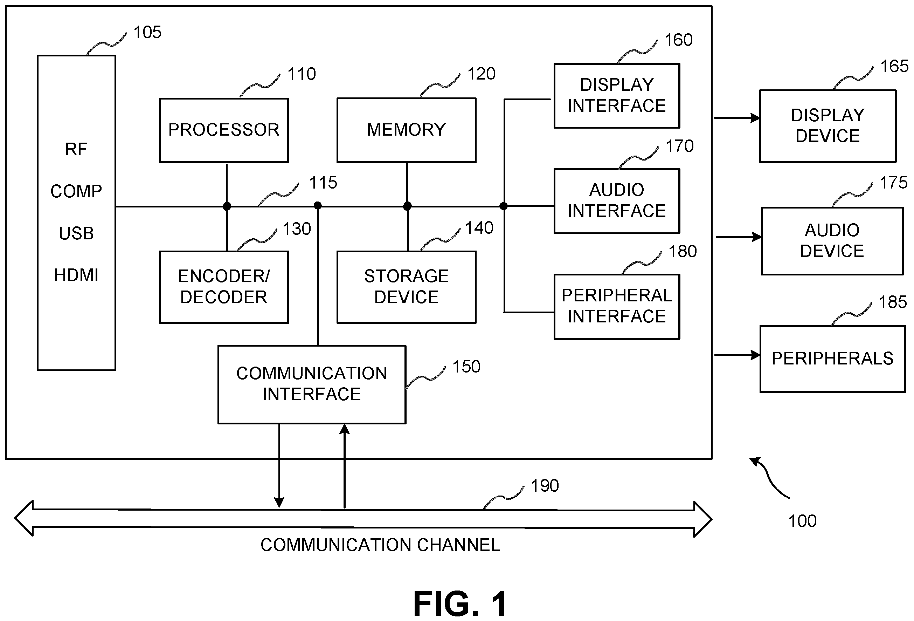

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

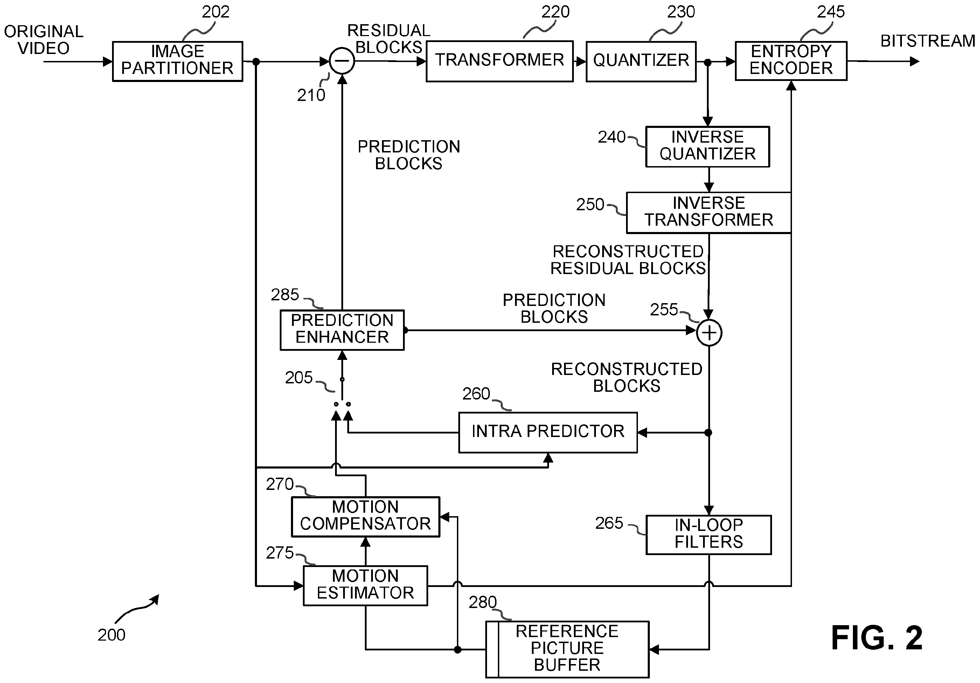

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

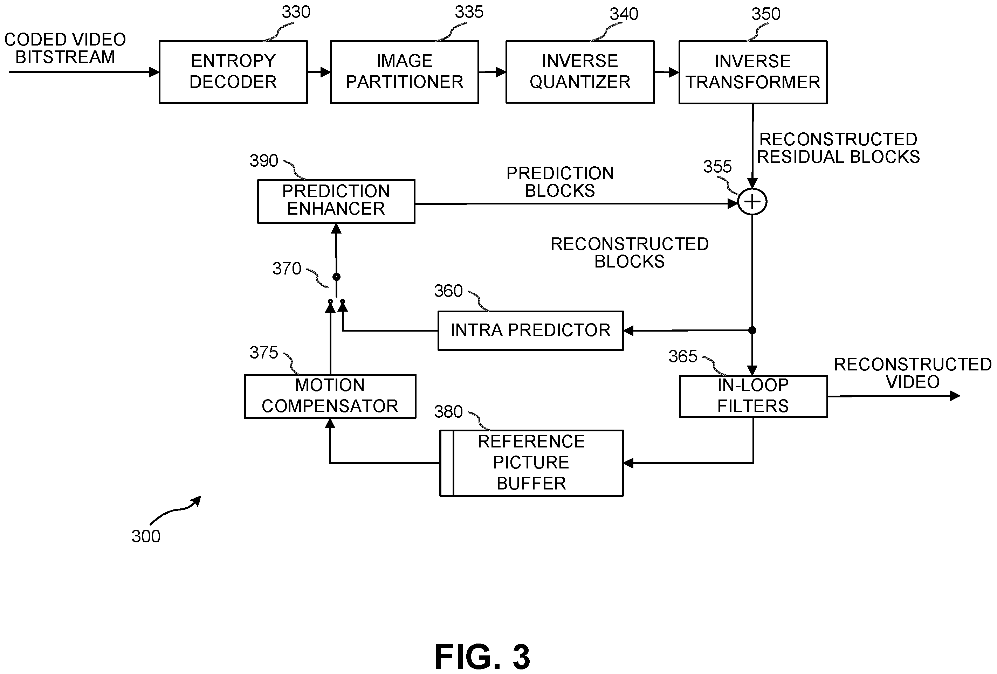

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by $C$, $Cb$, $Cr$).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Features described herein may be associated with intra template matching prediction (ITMP) mode. ITMP may be an intra prediction mode that copies a prediction block from the reconstructed part of the current frame, which has an L-shaped template that matches a current template. For a predefined search range, the encoder may search for the most similar template to the current template in a reconstructed part of the current frame and use the corresponding block as a prediction block. The encoder may signal the usage of the mode, and the prediction operation described herein may be performed at the decoder side.

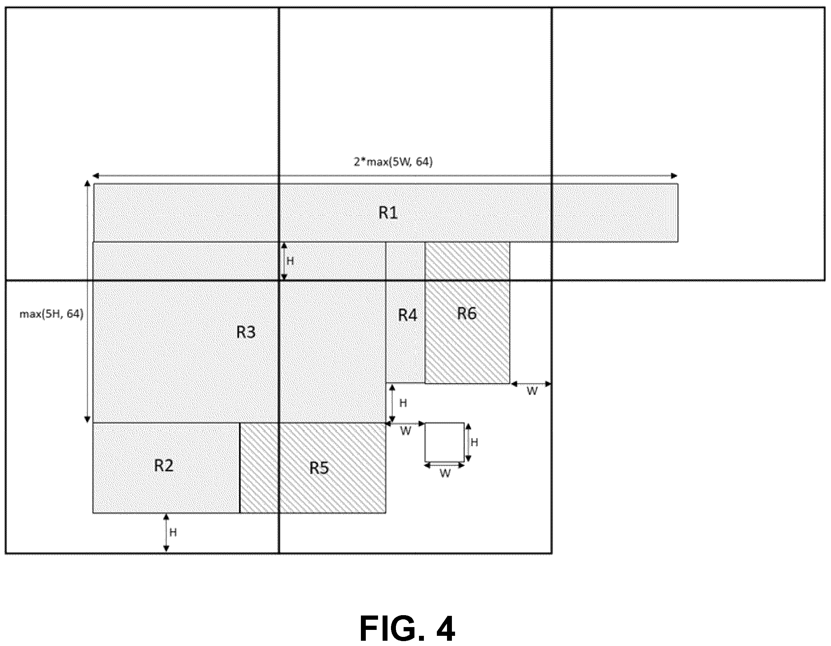

The prediction signal may be generated by matching the L-shaped, top-only or left-only causal neighbor of the current block with a block in a predefined search area in FIG. 4. There may be 6 predefined search areas, e.g., R1 to R6 in FIG. 4, which may include the reconstructed samples from the top and left coding tree units (CTUs) and part of the reconstructed samples within the current CTU that are located above, left, bottom-left and top-right to the current block.

Sum of absolute differences (SAD) may be used as a cost function. A given search order of 6 regions may be utilized, e.g., R4, R5, R6, R1, R2, and R3. The decoder may construct a candidate list of template matching block vectors (BVs). The BVs may be ranked in ascending order according to the template cost. The following modes are supported.

The supported mode may include a single predictor. A single predictor may be selected from the candidate list. The supported mode may include a fusion of multiple predictors. Multiple predictors may be blended to derive the final prediction block. The blending weights may be computed from the template matching cost of each predictor, or with Wiener-filter based weight derivation method.

The supported mode may include sub-pel precision. When a single predictor is used, sub-pel precision may be used with 1/2-pel precision, 1/4-pel precision and 3/4-pel precision, with 8 directions, for example.

The supported mode may include a linear filter model. A linear filter may be learned between the reference template and current template and be applied the linear model to reference block. The mode may be used for single predictor, for example, when sub-pel precision is not used.

The supported mode may include an ITMP extension to local illumination compensation (LIC) (ITMP-LIC), decoder-side intra mode derivation (DIMD) (ITMP-DIMD) and spatial geometric partition mode (SGPM) (ITMP-SGPM). The supported mode may include intra template matching prediction (ITMP) extension to template-based intra mode derivation (TIMD).

The dimensions of regions (SearchRange_w, SearchRange_h) may be set proportional to the block dimension (BlkW, BlkH) to have a fixed number of SAD comparisons per pixel. The dimensions of regions may include the following:

$$SearchRange\_w = min(64, a * BlkW)$$

$$SearchRange\_h = min(64, a * BlkH)$$

where 'a' is a constant that controls the gain/complexity trade-off. In an example, 'a' may equal to 5.

FIG. 4 show an example intra template matching search area used. The complexity of ITMP may be proportional to the template matching process, where the difference between the templates of the current block and of the predicted block is computed for a position (e.g., a BV candidate) within the available search range. To speed-up the template matching process, the search range of search regions may be subsampled, e.g., by a factor of 3 (e.g., sparse search). For example, every third position in horizontal and vertical direction may be tested. Tested positions (e.g., block vectors) in sparse search may be referred as sparse candidates. Positions/candidates within the sparse search may be tested, their template cost may be calculated, and a refinement process may be performed. The refinement may be done via a second template matching search around the several best candidates as described herein (e.g., sparse search) with a reduced range.

The ITMP tool may be enabled for coding units (CUs) with size less than or equal to 64 in width and height. This maximum CU size for intra template matching may be configurable.

The ITMP may be signaled at a CU level through a dedicated indication (e.g., flag) when DIMD is not used for current CU. That is, if ITMP is used, for example, the remaining intra modes may be inferred to be unused. In examples described herein, a flag and an indication may be used interchangeably.

ITMP may be used for natural and screen content. Multi-candidate ITMP may be used, as described herein. In an example including multi-candidate ITMP, a candidate list may be constructed with the candidate BVs ranked in ascending order of their template matching costs, and the index of the selected candidate may be signaled in the bitstream.

Example ITMP modes may include a left template mode and an above template mode (e.g., besides use of an L-shape mode). The left and above template modes may use a left side or above side of the current prediction unit (PU) to derive the template matching candidates.

Features described herein may be associated with multi-candidate ITMP. In multi-candidate ITMP, a candidate list may be constructed with the candidate BVs ranked in ascending order of their template matching costs, and the index of selected candidate may be signaled in the bit-stream. Candidate list construction and ranking BVs in ascending order may be based on their template matching costs and may be done as described herein, e.g., sparse searching and refining may be utilized.

ITMP may, for example, select a (e.g., one) candidate, e.g., one block vector (BV) which has the smallest template matching cost. The same process may be performed on the encoder and decoder side, e.g., additional signaling may be associated with indicating the final predictor. In some examples, in camera captured content, the decoder may (or may be unable to) find a match (e.g., a perfect match). Blocks (e.g., several blocks) may be similar to the current block, and their template matching costs may be close. The BV candidate with the smallest template matching cost may not be the best predictor.

Multiple candidates may be used for ITMP. A candidate list may be constructed, and the candidate BVs are ranked in ascending order based on their template matching costs. An index may be signaled in the bit-stream to indicate which candidate BV from the final list is used for the current block.

Template matching may be used to select a shortlist of promising candidates from a (e.g., large) number of possible BVs and allows the encoder, which may refer to the current block, to make the final decision.

The syntax may be as follows:

| |
|---|
| ... |
| intra_tmp_flag |
| if(intra_tmp_flag) { |
| intra_tmp_idx |
| } |
| ... |

where intra_tmp_flag equals to 1 means that current block uses ITMP and intra_tmp_idx further indicates which BV in the candidate BV list will be used to identify the prediction block.

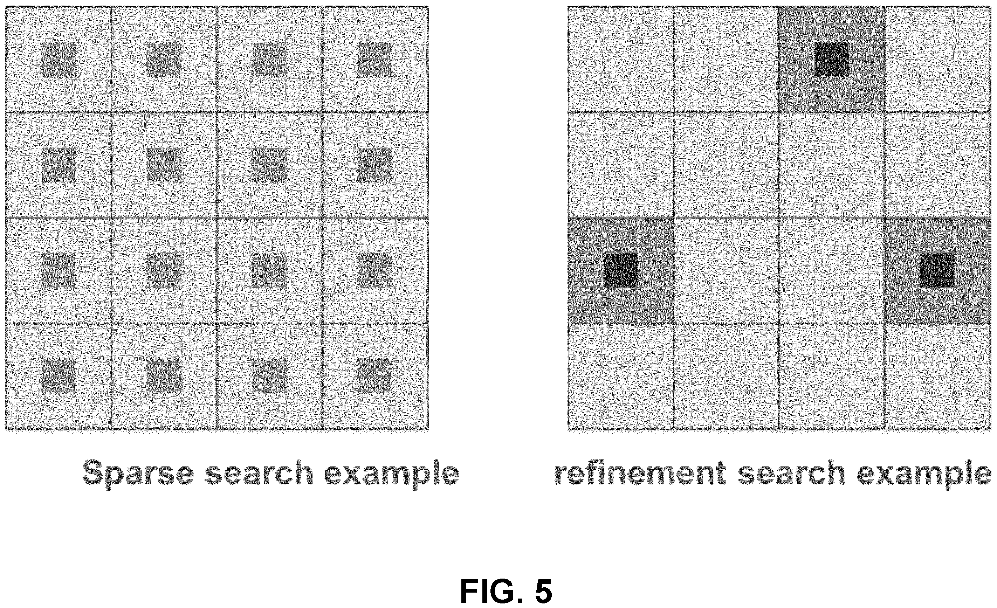

FIG. 5 illustrates a sparse search and refinement in an ITMP search. To build the candidate list, a sparse search and a refinement search may be used as illustrated in FIG. 5. In the sparse search, the subsampling factor may be 3 (e.g., every third position in horizontal and vertical direction is tested) (e.g., sparse search). and the top BVs (e.g., the top 30 BVs) may be maintained based on their template matching cost. In the refinement search, a 3x3 block around the 30 BVs may be tested. The top BVs, (e.g., the top 19 BVs) after refinement may be selected to form the final candidate list. One of 19 final candidates may be selected as a final predictor by the encoder and its index may be signaled to the decoder. Search strategies may be associated with examples described herein.

ITMP syntax may be coded/decoded if DIMD flag is false and if ITMP sps flag is true.

| |
|---|
| ... |
| intra_tmp_flag |
| if(intra_tmp_flag) { |
| intra_tmp_fusion_flag |
| if(intra_tmp_fusion_flag) { |
| intra_tmp_fusion_idx |
| intra_tmp_lic_flag |
| } else { |
| intra_tmp_idx |
| intra tmp_filter flag |
| if(!intra_tmp_filter_flag) { |
| intra_tmp_lic_flag |
| } |

(continued)

| if(!intra_tmp_filter_flag and !intra_tmp_lic_flag ) { |
| intra_tmp_sub_pel_precision_idx |
| if(intra_tmp_sub_pel_precision_idx != 0) { |
| intra tmp sub_pel direction idx |
| } |
| } |
| } |
| } |
| ... |

intra_tmp_flag indicates whether the intra prediction type for current block is ITMP or not.

intra_tmp_fusion_flag indicates whether fusion is used or not for current block.

intra_tmp_fusion_idx specifies the candidate set used for ITMP fusion. The range of intra_tmp_fusion_idx may be 0 to 2, and intra_tmp_fusion_idx may be used to indicate one of the three candidate sets {BV0 to BV4}, {BV5 to BV9}, {BV10 to BV14}.

intra_tmp_lic_flag indicates if ITMP with LIC is used.

intra_tmp_idx specifies the index of BV in the candidate list used for current block. The range of intra_tmp_idx may be 0 to 18. Candidates from L-shape template, top template and left template may be included in the same candidate list.

intra_tmp_sub_pel_precision_idx specifies the precision index for current block. The range of intra tmp sub_pel_precision idx may be 0 to 3, used to indicate integer-pel precision, 1/2-pel precision, 1/4-pel precision and 3/4-pel precision, respectively.

intra_tmp_sub_pel_direction_idx specifies the sub-pel direction index for current block. The range of intra tmp sub_pel_phase idx may be 0 to 7.

Features described herein may be associated with ITMP with neighboring candidates and ITMP with merge candidates.

Candidates may be added to an ITMP search process by utilizing BVs of surrounding blocks. In ITMP mode, a template matching search process within pre-defined search regions may be performed to obtain up to 19 candidate BVs. The template matching search process may use sparse search to shorten the most promising candidates to 30 and perform refinement around the 30 candidates to get 19 candidates. The ITMP search may be augmented with updated candidates, e.g., block vectors of neighboring PUs that are coded with IBC (Intra Block Copy) or ITMP. The updated candidates may be called merge BV candidates or merge candidates. Prediction modes may use BVs to create a prediction. The modes may include SGPM, DIMD, and TIMD. ITMP may be augmented, in addition to IBC and ITMP BVs, with BVs from SGPM, DIMD, and TIMD mode. The ITMP may be modified by including probable candidates from neighboring blocks during the ITMP search process. The ITMP candidates may be extended with updated block vectors (e.g., merge candidates). Merge BV candidates may be collected from neighboring local and non-local blocks.

Using merge BV candidates in ITMP may be extended to prediction modes, such as DIMD, TIMD and SGPM. With respect to the ITMP mode that uses sparse search and refinement, BVs coming from

ITMP sparse search and refinement may be tested, as well as BVs coming from outside an ITMP search range, e.g., outside the search range depicted in FIG. 4.

In Intra Block Copy (IBC) merge mode, a merge index may be coded to indicate which neighboring PU block vector is selected. A PU coded in IBC merge mode may utilize selected BVs of the neighboring PUs, which may be better correlated with the current PU.

During IBC merge mode, the ITMP BVs may be used as IBC merge candidates. Using information of neighboring PUs while performing the template matching search for ITMP may lead to improved performance. The template matching cost process to rank the updated candidates among computed candidates, such as those coming from the sparse search, may be used.

The merge candidates may include local and non-local neighboring candidates. Whenever a BV is found within the local or non-local neighborhood of the current PU, the BV may be added to the merge candidates. Merge candidates may be tested after (or before) the sparse candidates. Merge candidates' template cost may be obtained as for other candidates, e.g., sparse candidates. Merge candidates may be ranked together with candidates based on their template matching cost. The top 30 candidates may be selected for further refinement. By using merge candidates, the top candidates may include candidates that are not part of the sparse search grid.

The top (e.g., top 30) candidates may be refined with template matching, e.g., a second template matching. In examples, refinement of merge candidates may be different than for candidates that come from the native sparse search. For example, one may use 11x11 refinement if a candidate is from the merge candidates.

Candidates that are tested in refinement process may be ranked based on TM cost, and final 19 candidates may be selected after refinement. One out of 19 may be selected by the encoder and its index may be signaled.

The ITMP candidates include updated BVs that are not (e.g., previously) tested by ITMP process. For example, IBC block vectors may be included, which have a search region larger than the ITMP block vector(s), and because the IBC block vectors may include candidates that are not part of the sparse search candidates. The added BVs may be correlated with the current block statistics, as they may have been selected for predicting nearby blocks.

The merge candidates may be enriched by adding more candidates from the blocks (e.g., blocks coded in IBC or ITMP mode). Bi-prediction IBC candidates may be included. A best-by-cost ITMP candidate may be included in the merge candidates.

For example, if the neighboring PU is coded in Bi-Prediction IBC mode, an additional BV from Bi-Prediction IBC mode may be used and added to the merge candidates. Instead of a BV, two BVs coming from a PU coded in Bi-Prediction IBC mode may be added to the merge candidates.

Also, if the neighboring PU is coded in ITMP mode, a BV that is selected for the PU may be added to the merge candidates. The BV may be indicated by the ITMP index (intra_tmp_idx). The BV may not be the one with the smallest template cost. If intra_tmp_idx is larger than 0, the BV with the smallest template cost may be included, e.g., the candidate with the intra_tmp_idx equal to 0 (e.g., the candidate which is the first in the list of 19 final candidates).

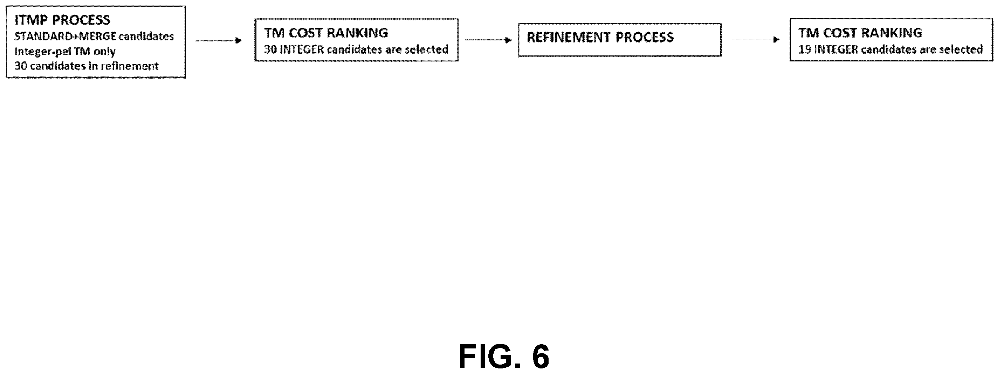

FIG. 6 shows an example workflow of an ITMP process. To maintain a computational cost within a limit, a pre-selection of the merge candidates may be applied. Pre-selection may be applied prior to template cost calculations, e.g., candidates may be discarded prior to template matching cost computations to reduce complexity. Pre-selection may be done in a way that coding gain is not (e.g., significantly) degraded when compared by utilizing all available merge candidates. Criteria may prevail, e.g., adding more importance to complexity reduction. For example, N out of M available merge candidates may be used if M>N. If M<=N, M available candidates (e.g., all available M candidates) may be used.

In examples, merge candidates that are located outside of the ITMP search region (referring back to FIG. 4) may be prioritized when using merge candidates. Merge candidates may be reordered based on their position, e.g., those outside ITMP search region may be placed first in the processing order, and up to 10 candidates may be tested (N=10).

A refinement process may be done for the best 30 candidates selected by using template matching cost. A refinement may be used for candidates coming from sparse search (e.g., as in native ITMP), and candidates coming from merge candidates. The refinement for the candidates coming from sparse search may use 3x3 refinement. The refinement for the candidates coming from merge candidates may use 11x11 refinement around the candidate.

Refinement may be implemented such that there is a 3x3 refinement process if the merge candidate is within the ITMP search region (e.g., one of the regions illustrated in FIG. 4) and, for example, 11×11 refinement if the merge candidate is located outside the ITMP search region.

In examples, merge candidates coming from an IBC block may have 11x11 refinement regions, and merge candidates coming from an ITMP neighboring block may use 3x3 refinement regions regardless of their position relative to the ITMP search region. A 3x3 and 11x11 search window size may be used, as an example.

Features described herein may be associated with an auto relocated block vector prediction (AR-BVP). Auto relocated block vector prediction (AR-BVP) may be introduced into BVs merge candidate construction. AR-BVP may be derived as a guiding BV plus a BV of a reference block, located by the guiding BV. The initial guiding BV may be set to be an existing BV that is in merge candidates. In examples, up to 20 auto-relocated block vector prediction (AR-BVP) candidates may be constructed to get more merge candidates.

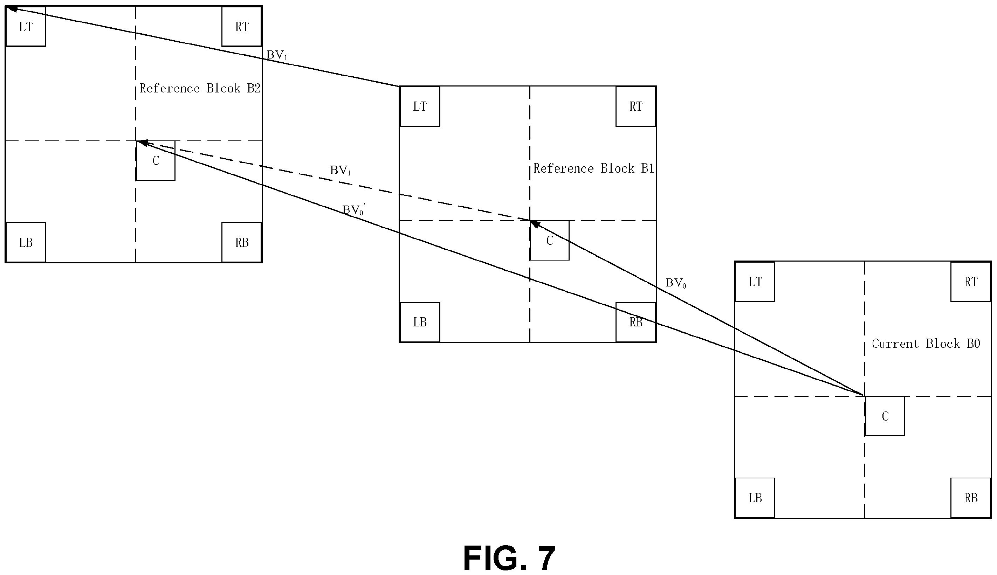

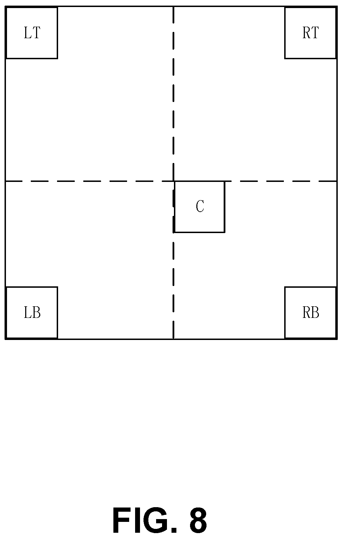

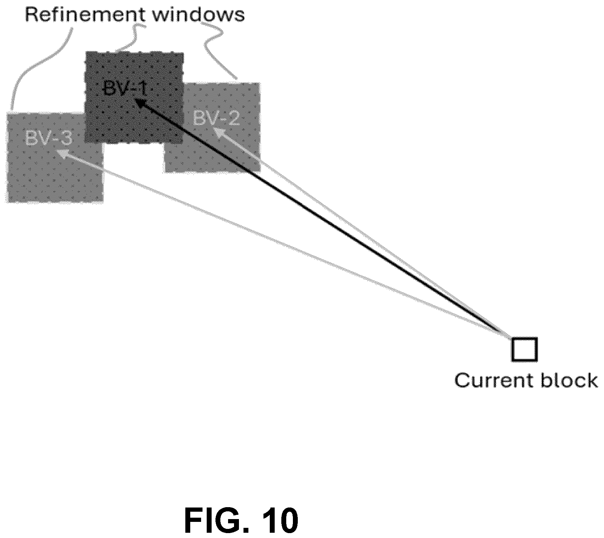

FIG. 7 illustrates an example of ITMP-AR-BVP's construction. FIG. 8 illustrates five example positions in a reference block. As shown in FIG. 7, a guiding block vector BV0 (e.g., an existing BV already part of the merge candidates) associated with the current block B0 may point at a reference block B1. If B1 has a BV denoted as BV1 pointing at a reference block B2, BV0', given by BV0' = BV0 + BV1, may be determined as the AR-BVP. BV1 itself may be directly used as AR-BVP to get available candidates. When deriving AR-BVP, five positions including top-left (e.g., LT in FIG. 10), top-right (e.g., RT in FIG. 10), center (e.g., Ctr in FIG. 10), bottom-left (e.g., LB in FIG. 10), and bottom-right (e.g., RB in FIG. 10) positions of the reference block may be checked to find the reference block's BVs. Both the merge candidates from the neighboring PUs and constructed AR-BVPs may be used as guiding BVs. The construction may be recursively processed until the number of AR-BVPs reaches 20 or no updated AR-BVPs is constructed.

Up to 20 AR-BVPs may be constructed. If an AR-BVP candidate is selected for refinement, the AR-BVP candidate may have a refinement range of 3x3. The same template matching cost may be used to compare the merge positions and existing positions.

The auto-relocated BV (AR-BVP) based on the sparse candidates may be used instead of (or in addition to) auto-relocated BV (AR-BVP) based on the merged candidates. The candidates derived from the sparse candidates may be used as guiding BVs to construct AR-BVPs by adding the BVs of the reference blocks. The AR-BVP candidates may be added to the merge candidates.

The block-vector-based prediction may be used in combination with directional prediction. The block-vector-based prediction may be used with SGPM and with DIMD. In both modes, the merge candidates (e.g., adjacent and non-adjacent) may be evaluated with the template cost to select a (e.g., at least one) best block vector predictor to be combined with the directional modes.

TIMD may benefit from the block vector prediction in the same manner as SGPM and DIMD modes. Any of the modes (e.g., any of the three fusion modes) of TIMD may be replaced by a block-vector-based prediction, where BV is selected from the merge candidates based on the template cost. The merge candidates of ITMP may be modified with auto-relocated block vector prediction. The additional candidates may be used for TIMD mode with block vectors.

Features described herein may be associated with BVs from HMVP list in merge mode. Merge candidates may be added by using the block vectors from an history-based motion vector prediction (HMVP) list. ITMP BV may be stored for HMVP. Block vectors of HMVP list may be used in IBC mode. The merge candidates may be extended with the HMVP candidate BVs.

Features described herein may be associated with merging (e.g., clustering) candidates and their refinement regions.

Adding more merge candidates may improve performance by imposing diversity of the possible BVs to be tested. Such merging may be associated with complexity. ITMP mode may extend the sparse candidates with additional merge candidates acquired from the spatial and non-spatial (local and non-local) neighboring PUs. A refinement stage may be carried out using a local search window around selected BV candidates. The refinement window size may vary based on the candidate type. The refinement windows of candidates may overlap with other candidates' refinement windows. Modes, such as SGPM, TIMD and DIMD, may use BV candidates, and refinement may be used. During refinement (e.g., in ITMP), refinement windows may overlap, which may introduce repetitive calculations.

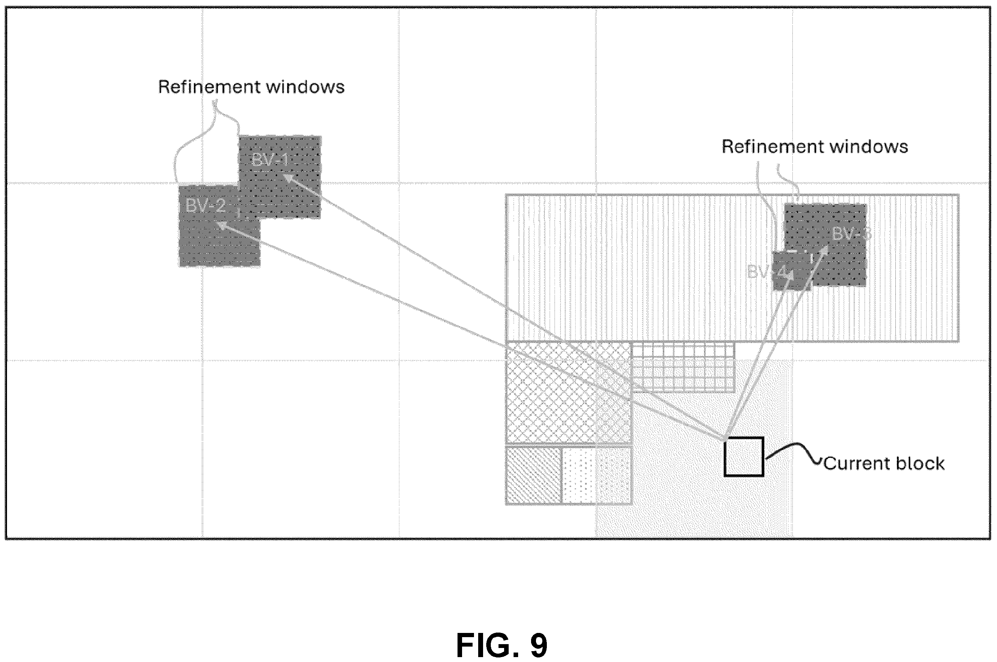

FIG. 9 illustrates and example of a refinement window overlapping. In ITMP mode, the refinement window size for the sparse candidates may be $\pm \frac{SI}{2}$, where *SI* is subsampling factor, e.g., 3 in case of ITMP. Refinement windows of the sparse candidates may, for example, not overlap. By introducing merge and ARBV candidates, overlap may occur. For example, the refinement window size for the merge BV candidates may be 11x11, and the BV candidates may point in or out of the ITMP search region. The inner merge candidates' refinement window may overlap the sparse candidates' refinement window. The distance between the BV merge candidates may or may not be constrained, so the merge's refinement window may overlap (see FIG. 9). In FIG. 9, BV-1 and BV-2 are two merge candidates whose refinement windows overlap. BV-3 is a merge candidate whose refinement window overlaps with the refinement window of the sparse candidate BV-4.

The refinement window around a BV candidate may vary based on the candidate type: merge candidates may use an 11x11 window size, and ARBVP and sparse candidates may use a 3x3 window size. The distance between the merge, ARBVP, and sparse candidates may not be constrained, and the refinement windows may overlap.

Refining BV candidates (e.g., weather sparse, ARBV, or merge) with overlapping refinement windows may be associated with an inefficiency, because such refinement may perform the exact cost computation multiple times for the overlapped positions.

Caching tested candidates may be used. An example may include caching already tested candidates (their positions and/or TM costs). Caching positions (and/or costs), although it may skip performing certain computational operations multiple times for the same position (e.g., for the same candidate) may be time-consuming due to memory allocation and memory access.

FIG. 10 illustrates an example of merging overlapping BV candidates. Features described herein may be associated with clustering. For coinciding BVs, the same refinement window without expansion may be used. Multiple overlapping BVs may be gathered together (e.g., fused) in an (e.g., one) area of the same size, which may be equal to the initial refinement area (e.g., no refinement area expansion). The BVs may be fused together, and a single BV and single refinement region may be used. If BV-1, BV-2, and BV-3 refinement windows overlap (regardless of BVs type, e.g., merge, ARBV or sparse, and regardless of their refinement window size), BV-1 and the refinement window of BV-1 may be kept (e.g., depicted with the darkest shaded region), and other BVs may be discarded (e.g., not used). Overlapping BVs may be gathered (e.g., fused) in BV-1, and the refinement window of BV-1 may be used. BV-1 may be chosen based on the processing order. For example, the first vector in processing order may be the one that is kept among all BVs with overlapped refinement windows.

The clustering may be associated with a reduction to the amount of refinement for a BV. Multiple BVs may be merged into a single BV, and a refinement window size may, for example, not change. Repetitive computations for overlapped regions/candidates may be alleviated (e.g., based on the clustering).

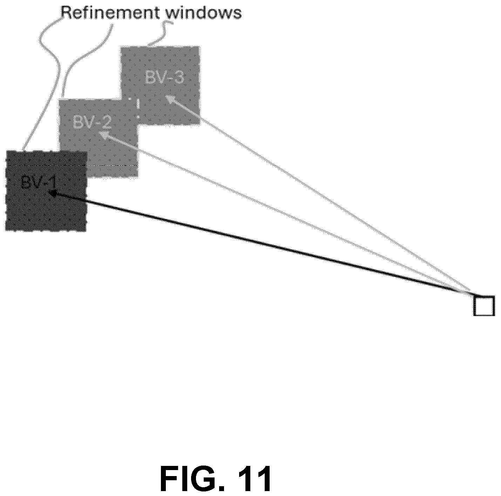

FIG. 11 illustrates an example of merging overlapping candidates. In examples, the processing order of the BV candidates may be relevant. In FIG. 11, there are three BVs with overlapping refinement windows, namely BV-1, BV-2 and BV-3. Since BV-1 is the first one in the processing order, BV-1 may be the BV that is kept for future processing. The complete area of BV-3 may be discarded, and BV-3 may be distant from BV-1. BV-3 and refinement area around it may not be tested.

A clustering approach may be applied after gathering merge and ARBVP candidates, and clustered candidates may be used in subsequent modes that utilize the BVs, e.g., SGPM, TIMD, DIMD, ITMP. In some examples, the clustering approach may be applied for a subset of the modes described herein.

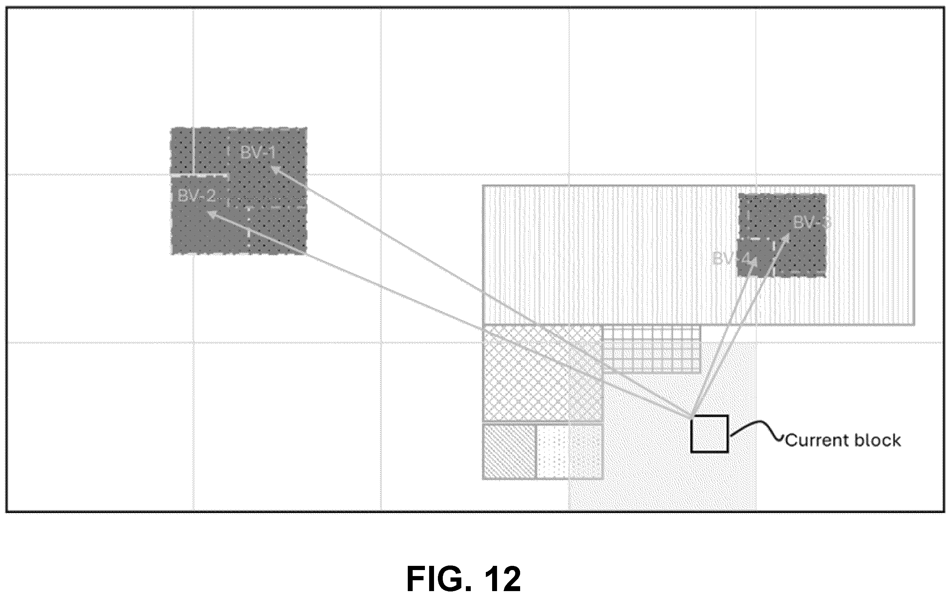

FIG. 12 illustrates merging BV candidates with overlapping refinement regions (e.g., overlapping BV candidates). The candidates whose refinement windows overlap with other candidates may be clustered, and an updated refinement window that includes both candidates' local windows may be determined. For example, see FIG. 12 where the shaded region is an updated refinement region.

Examples described herein may be associated with testing the merge, ARBVP, and sparse candidate refinement windows overlapping. If two refinement windows overlap, the BV candidate with the lower template cost may be kept and ranked with other candidates for further refinement. An updated refinement window that comprises both individual refinement windows may be determined for the winning candidate.

Clustering may be applied at ITMP and modes, such as, for example, SGPM, DIMD, and TIMD. Refining BV candidates (e.g., including sparse, ARBV, or merge) with overlapping search windows may be associated with performing the cost computation multiple times for the overlapped positions.

In examples, a combination of clustering approaches may be used. Multi-pass clustering may be used for improved performance and to avoid repetitive computations that may exist by using clustering.

The number of BV candidates to be tested may be reduced, as candidates may be fused in a (e.g., one) single candidate with a (e.g., one) single refinement window. Performing the same calculations for overlapped positions may be reduced or avoided. For example, at FIG. 10 and FIG. 11 among three overleaping candidates, BV-1 may be kept for further processing. Its refinement window may be depicted with the darkest shaded area. Remaining BVs may be discarded. Such refinement may discard a (e.g., large) refinement area of BV-2 and BV-3, and some positions may not be tested in refinement. Discarded regions of BV-2 and BV-3 refinement area are depicted in the lightest shaded region. The processing order of the BVs may be relevant, e.g. the order in which BVs are added to the merge candidates.

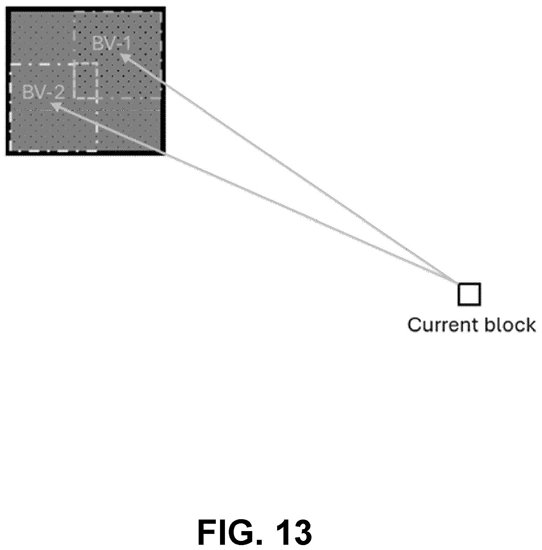

FIG. 13 illustrates an example of merging overlapping BV candidates. Performing the same calculations multiple time for the candidates with the overlapped refinement regions may be mitigated. In examples, the refinement region may be enlarged by merging two regions in a (e.g., one) single refinement window that includes both individual regions. One BV candidate with a smaller TM cost may be kept and an updated refinement window (e.g., shaded region) is depicted with the line on the outside of the refinement window in FIG. 13. Parts of the updated refinement window may not be tested if two BVs are processed separately during the refinement.

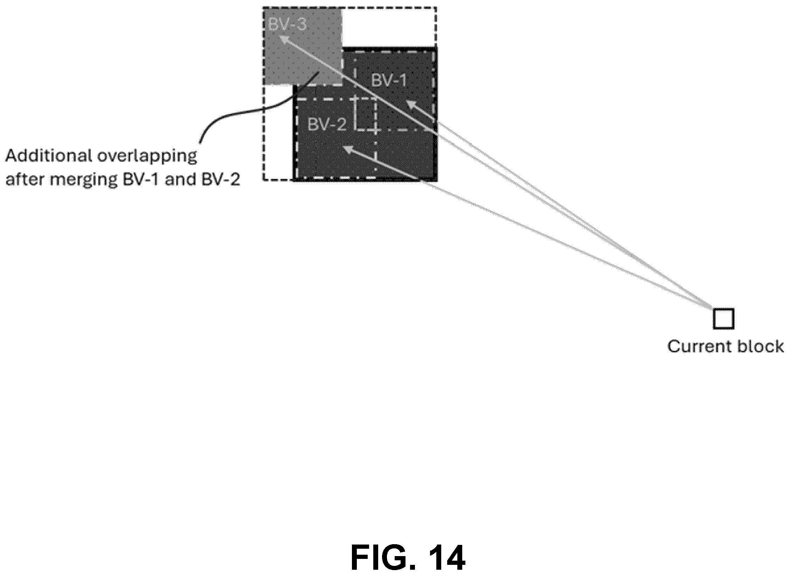

FIG. 14 illustrates an example of overlapping after merging two candidates. After enlarging the refinement window, updated candidates that previously did not overlap BVs (e.g., any of two BVs) from FIG. 13, may overlap with the updated refinement region. In FIG. 14, where BV-3 (e.g., top left) overlaps with the updated refinement window, double calculations maybe introduced. A second pass clustering may be performed (e.g., to mitigate double calculations). Overlapping with more candidates that previously did not overlap may occur during a region expansion. A stopping criteria may be determined when merging candidates with muti-pass clustering.

A BV to keep for further processing may be determined. The BV to keep may be decided based on the size of overlapping positions with candidates. For example, in FIG. 11, BV-2 has a larger overlapped refinement area with other candidates compared to BV-1 and BV-3. BV-2 and its refinement region may be kept.

In some examples, a combined block vector candidate may be computed or calculated. For example, a mathematical combination of overlapping block vectors may be used. In examples, a video processing device (e.g., a video encoding and/or decoding device) may obtain, for a video block, block vector candidates (e.g., the block vector candidates may be associated with a refinement region). The device may identify, among the plurality of block vector candidates, a cluster of block vector candidates having overlapping refinement regions. The device may calculate a combined block vector candidate (e.g., a mathematical combination) based on the cluster of block vector candidates. A mathematical combination may include a mean of the cluster of block vectors (e.g., component-wise or vector mean in $\mathbb{R}2$ - dimensional vector space). In examples described herein, a block vector and a block vector candidate may be used interchangeably.

For example, a center of mass may be found where a block vector is averaged based on an associated factor. The factor for a block vector candidate may be determined based on the overlapping area with other candidates (e.g., the size of the overlapping area). For example, the device may determine a first refinement region for a first candidate of the cluster of block vector candidates. The device may determine a second refinement region for a second candidate of the cluster of block vector candidates. The device may determine that the first refinement region and the second refinement region overlap, and the combined block vector may be calculated based further on the determination that the first refinement region and the second refinement region overlap.

In examples, the mean block vector may be calculated based on the determined center of mass of the cluster of block vector candidates. For example, if there are three vectors, a vector's component may be weighted based on its importance on the resulting vector. For example, the device may determine a first overlapping refinement region of a first block vector candidate from the cluster and a second block vector candidate from the cluster. The video encoding device may determine a second overlapping refinement region of the second block vector candidate and a third block vector candidate from the cluster. The video encoding device may weigh the first block vector candidate based on the first overlapping refinement region, the second block vector candidate based on the first overlapping refinement region and the second overlapping refinement region, and the third block vector candidate based on the second overlapping refinement region. The combined block vector candidate may be calculated based on the weighted first block vector candidate, the weighted second block vector candidate, and the weighted third block vector candidate.

The device may refine the combined block vector candidate based on the updated refinement region. The device may include the refined combined block vector candidate in a block vector candidate list, and the video block may be decoded based on the block vector candidate list. The device may determine an updated refinement region for the combined block vector candidate. The device may decode the video block based on the updated refinement region and the combined block vector candidate.

For example, the following may be true for finding a mean of N vectors:

$$BVclustered = \frac{1}{N} \sum_{i=0}^{N-1} BVi$$

where N is the number of overlapping BVs. *BVi* is i-th overlapping vector and BVclustered is used to replace overlapping vectors.

The vectors may be summed and divided by a scalar. The operations may be available for vector spaces (e.g., over $\mathbb{R}$). For example, the average between BV1, BV2, $BV3 \in \mathbb{R}2$ may be determined to be $(1/3) \cdot (BV1 + BV2 + BV3)$, where the addition is in the vector space (e.g., pointwise addition) and 1/3 is a scalar in $\mathbb{R}$. This may be equivalent to an average coordinate-wise. For 2D vectors, the mean of the first coordinates and the mean of the second coordinates may be found, and the mean may be the coordinates of the mean vector.

A combined BV (e.g., a calculated, updated BV) may replace vectors and a refinement window around an updated vector may be determined. A size of the refinement region for the combined vector may be based on the refinement size of the vectors that formed the updated vector. A candidate refinement region size associated with a block vector candidate from the cluster of block vector candidates may be determined, and the updated refinement region may be determined based on the determined candidate refinement region size.

For example, if three vectors are merged where two of the vectors have $11 \times 11$ refinement and 3x3 refinement respectively, the larger refinement may be used (e.g., 11x11). In examples, the smaller refinement size may be used (e.g., 3x3). An average refinement size may be used (e.g., 8x8). In examples, a refinement window size of an updated vector may be pre-determined prior. Based on an updated vector being constructed from overlapping vectors, the updated vector may use a 13x13 refinement.

In examples, the size of the updated refinement window may be based on a quantity of the block vector candidates in the cluster, and the updated refinement region is determined based on the size of the updated refinement region. For example, a refinement window may be adjusted such that the refinement window is enlarged depending on how many vectors are merged. Let N be the number of merged vectors. In examples described herein (e.g., FIG. 11), N=3. The updated vector may use a*N larger refinement size, where $\alpha$ is a factor that controls window enlargement (e.g., which controls complexity). Say a=2 and N=3, the refinement window may be enlarged by 6 positions, e.g., 6 positions in horizontal and 6 positions in vertical dimensions. If the refinement window was initially 11x11, the refinement window may be updated to 17x17. Refinement window enlargement may be performed after merging, and enlargement may depend on the number of merged BVs.

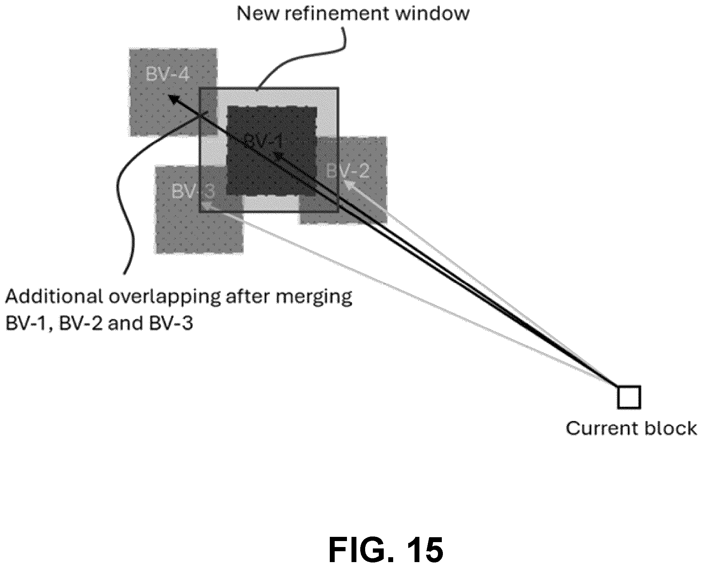

FIG. 15 illustrates an example illustration of an updated refinement region after enlargement and overlapping with BV-4. Clustering may occur over multiple passes. When enlarging the refinement window (e.g., using a clustering method described herein), BVs (e.g., their refinement windows) that previously did not overlap with any of the BVs, may overlap with an updated clustered candidate with an enlarged refinement window. Such is illustrated on FIG. 15 and FIG. 14. For example, it may be determined that the updated refinement region for the combined block vector candidate overlaps with a refinement region of a block vector candidate outside of the cluster of block vector candidates. The device may calculate a second combined block vector candidate based on the first combined block vector candidate and the block vector candidate outside of the cluster of block vector candidates. The device may determine a second updated refinement region for the second combined block vector candidate, and the video block may be processed (e.g., encoded and/or decoded) based on the second combined block vector candidate and the second updated refinement region. The device may determine a second updated refinement region for the second block vector candidate. The device may refine the combined block vector candidate based on the second updated refinement region. The device may include the refined combined block vector candidate in a block vector candidate list, and the video block may be decoded based on the block vector candidate list.

In examples, multi-pass clustering may be performed. If refinement window enlargement occurs during a pass of clustering, a round (e.g., pass) of clustering may be performed, using updated clustered candidates along with remaining candidates.

A stopping criteria may be determined for multi-pass clustering. In examples, multi-pass clustering may be performed until there are no more candidates to cluster (e.g., merge).

In examples, clustering may be performed N times or until there is no more candidates to cluster (e.g., merge), where N is a predetermined number of clustering passes. Multi-pass clustering may be performed up to N times (e.g., no more than N times).

In examples, clustering may be performed if a refinement window size does not increase above a predefined size. When merging candidates, an updated refinement region may become larger than the predefined maximum size. The following may occur. The candidates may not be merged, and the candidates may continue to be used individually. The candidates may be merged, and the refinement window may not be enlarged (e.g., enlarged further).

Examples described herein may be used in a mode that uses BVs in combination with refinement, such as SGPM, TIMD, DIMD, and ITMP.

In examples, a video encoding device may be configured to determine a candidate refinement region size associated with a block vector candidate from the cluster of block vector candidates, and the updated refinement region may be determined based on the determined candidate refinement region size.

The video encoding device may refine the combined block vector candidate based on the updated refinement region. The video encoding device may include the refined combined block vector candidate in a block vector candidate list, and the video block may be encoded based on the block vector candidate list.

The combined block vector candidate may be a first combined block vector candidate. The video encoding device may determine that the updated refinement region for the combined block vector candidate overlaps with a refinement region of a block vector candidate outside of the cluster of block vector candidates. The video encoding device may calculate a second combined block vector candidate based on the first combined block vector candidate and the block vector candidate outside of the cluster of block vector candidates. The video encoding device may determine a second updated refinement region for the second combined block vector candidate, and the video block may be encoded based on the second combined block vector candidate and the second updated refinement region.

The combined block vector candidate may be a first combined block vector candidate. The video encoding device may identify, among the block vector candidates, a second cluster of block vector candidates having refinement regions that overlap the updated refinement region of first the combined block vector candidate. The video encoding device may calculate a second combined block vector candidate based on the cluster of block vector candidates and a second cluster of block vector candidates. The video encoding device may determine a second updated refinement region for the second block vector candidate. The video encoding device may refine the combined block vector candidate based on the second updated refinement region. The video encoding device may include the refined combined block vector candidate in a block vector candidate list, and the video block may be encoded based on the block vector candidate list.

The video encoding device may determine a first overlapping refinement region of a first block vector candidate from the cluster and a second block vector candidate from the cluster. The video encoding device may determine a second overlapping refinement region of the second block vector candidate and a third block vector candidate from the cluster. The video encoding device may weigh the first block vector candidate based on the first overlapping refinement region, the second block vector candidate based on the first overlapping refinement region and the second overlapping refinement region, and the third block vector candidate based on the second overlapping refinement region. The combined block vector candidate may be calculated based on the weighted first block vector candidate, the weighted second block vector candidate, and the weighted third block vector candidate.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A video decoding device comprising:
   a processor configured to:

   obtain, for a video block, a plurality of block vector candidates, wherein a block vector candidate is associated with a refinement region;
   identify, among the plurality of block vector candidates, a cluster of block vector candidates having overlapping refinement regions;
   calculate a combined block vector candidate based on the cluster of block vector candidates;
   determine an updated refinement region for the combined block vector candidate; and
   decode the video block based on the combined block vector candidate and the updated refinement region.

2. The device of claim 1, wherein the processor is further configured to:
   calculate a mean block vector of the cluster of block vector candidates, wherein the combined block vector candidate is the mean block vector of the cluster of block vector candidates.

3. The device of claim 2, wherein the processor is further configured to:
   determine a center of mass of the cluster of block vector candidates, wherein the mean block vector is determined based on the determined center of mass of the cluster of block vector candidates.

4. The device of any of claims 1-3, wherein the processor is further configured to:
   determine a size of the updated refinement region based on a quantity of the block vector candidates in the cluster, wherein the updated refinement region is determined based on the size of the updated refinement region.

5. The device of any of claims 1-3, wherein the processor is further configured to:
   determine a size of the updated refinement region based on a scaling factor and a number of the block vector candidates in the cluster, wherein the updated refinement region is determined based on the size of the updated refinement region.

6. The device of any of claims 1-3, wherein the processor is further configured to:
   determine a candidate refinement region size associated with a block vector candidate from the cluster of block vector candidates, wherein the updated refinement region is determined based on the determined candidate refinement region size.

7. The device of any of claims 1-6, wherein the processor is further configured to:

refine the combined block vector candidate based on the updated refinement region; and
include the refined combined block vector candidate in a block vector candidate list, wherein the video block is decoded based on the block vector candidate list.

8. The device of any of claims 1-6, wherein the combined block vector candidate is a first combined block vector candidate, and the processor is further configured to:

determine that the updated refinement region for the combined block vector candidate overlaps with a refinement region of a block vector candidate outside of the cluster of block vector candidates;
calculate a second combined block vector candidate based on the first combined block vector candidate and the block vector candidate outside of the cluster of block vector candidates; and
determine a second updated refinement region for the second combined block vector candidate, wherein the video block is decoded based on the second combined block vector candidate and the second updated refinement region.

9. The device of any of claims 1-6, wherein the combined block vector candidate is a first combined block vector candidate, and the processor is further configured to:

identify, among the plurality of block vector candidates, a second cluster of block vector candidates having refinement regions that overlap the updated refinement region of first the combined block vector candidate;
calculate a second combined block vector candidate based on the cluster of block vector candidates and a second cluster of block vector candidates;
determine a second updated refinement region for the second block vector candidate; and
refine the second combined block vector candidate based on the second updated refinement region; and
include the refined second combined block vector candidate in a block vector candidate list, wherein the video block is decoded based on the block vector candidate list.

10. The device of any of claims 1-9, wherein the processor is further configured to:

determine a first overlapping refinement region of a first block vector candidate from the cluster and a second block vector candidate from the cluster;
determine a second overlapping refinement region of the second block vector candidate and a third block vector candidate from the cluster; and
weight the first block vector candidate based on the first overlapping refinement region, the second block vector candidate based on the first overlapping refinement region and the second overlapping refinement region, and the third block vector candidate based on the second overlapping refinement region, wherein the combined block vector candidate is calculated based on the weighted first block vector candidate, the weighted second block vector candidate, and the weighted third block vector candidate.

11. A video encoding device comprising:
a processor configured to:

obtain, for a video block, a plurality of block vector candidates, wherein a block vector candidate is associated with a refinement region;
identify, among the plurality of block vector candidates, a cluster of block vector candidates having overlapping refinement regions;
calculate a combined block vector candidate based on the cluster of block vector candidates;
determine an updated refinement region for the combined block vector candidate; and
encode the video block based on the updated refinement region and the combined block vector candidate.

12. The device of claim 11, wherein the processor is further configured to:
calculate a mean block vector of the cluster of block vector candidates, wherein the combined block vector candidate is the mean block vector of the cluster of block vector candidates.

**13.** The device of claim 12, wherein the processor is further configured to:
determining a center of mass of the cluster of block vector candidates, wherein the mean block vector is determined based on the determined center of mass of the cluster of block vector candidates.

**14.** The device of any of claims 11-13, wherein the processor is further configured to:
determine a size of the updated refinement region based on a quantity of the block vector candidates in the cluster, wherein the updated refinement region is determined based on the size of the updated refinement region.

**15.** The device of any of claims 11-13, wherein the processor is further configured to:
determine a size of the updated refinement region based on a scaling factor and a number of the block vector candidates in the cluster, wherein the updated refinement region is determined based on the size of the updated refinement region.

**FIG. 1**

EP 4 727 116 A1

FIG. 2

EP 4 727 116 A1

FIG. 3

**FIG. 4**

refinement search example

Sparse search example

FIG. 5

| ITMP PROCESS<br>STANDARD+MERGE candidates<br>Integer-pel TM only<br>30 candidates in refinement | → | TM COST RANKING<br>30 INTEGER candidates are selected | → | REFINEMENT PROCESS | → | TM COST RANKING<br>19 INTEGER candidates are selected |

# FIG. 6

**FIG. 7**

**FIG. 8**

**FIG. 9**

EP 4 727 116 A1

FIG. 10

FIG. 11

**FIG. 12**

**FIG. 13**

Additional overlapping
after merging BV-1 and BV-2

BV-3

BV-1

BV-2

Current block

**FIG. 14**

FIG. 15

EP 4 727 116 A1

**EUROPEAN SEARCH REPORT**

Application Number

EP 24 30 6651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RUIZ COLL (OFINNO) D ET AL: "EE2-related: IntraTMP merge candidates clustering based on refinement window", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0151 ; m67225 18 April 2024 (2024-04-18), XP030317494, Retrieved from the Internet: URL:https://jvet-experts.org/doc_end_user/ documents/34_Rennes/wg11/JVET-AH0151-v4.zi p JVET-AH0151_v4_clean.docx [retrieved on 2024-04-18] * abstract; figures 1, 2 * * paragraphs [0001], [0002] * ----- | 1-15 | INV. H04N19/105 H04N19/11 H04N19/176 H04N19/513 H04N19/53 H04N19/593 |
| X | WO 2023/202569 A1 (MEDIATEK INC [CN]) 26 October 2023 (2023-10-26) * abstract; figures 5-9 * * paragraphs [0051] - [0063] * ----- -/-- | 1,11 | |

TECHNICAL FIELDS SEARCHED (IPC)

H04N

The present search report has been drawn up for all claims

| Place of search | Date of completion of the search | Examiner |
|---|---|---|
| Munich | 20 February 2025 | Cakiroglu Garton, S |

EPO FORM 1503 03.82 (P04C01)

Europäisches
Patentamt

European
Patent Office

Office européen
des brevets

**EUROPEAN SEARCH REPORT**

Application Number

EP 24 30 6651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RUIZ COLL (OFINNO) D ET AL: "EE2-2.6: IntraTMP candidates with overlapping refinement window enhanced", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0129 12 July 2024 (2024-07-12), XP030320348, Retrieved from the Internet: URL:https://jvet-experts.org/doc_end_user/documents/35_Sapporo/wg11/JVET-AI0129-v3.zip JVET-AI0129-v3-clean.docx [retrieved on 2024-07-12] * abstract * * paragraphs [0001], [0002]; figure 1 * ----- | 1,11 | |
| A | COBAN M ET AL: "Algorithm description of Enhanced Compression Model 11 (ECM 11)", 144. MPEG MEETING; 20231016 - 20231020; HANNOVER; (MOTION PICTURE EXPERT GROUP OR ISO/IEC JTC1/SC29/WG11), , no. m65800 ; JVET-AF2025 28 December 2023 (2023-12-28), XP030313758, Retrieved from the Internet: URL:https://dms.mpeg.expert/doc_end_user/documents/144_Hannover/wg11/m65800-JVET-AF2025-v1-JVET-AF2025.zip JVET-AF2025-v1.docx [retrieved on 2023-12-28] ----- | 1-15 | TECHNICAL FIELDS SEARCHED (IPC) |

The present search report has been drawn up for all claims

| Place of search | Date of completion of the search | Examiner |
|---|---|---|
| Munich | 20 February 2025 | Cakiroglu Garton, S |

EPO FORM 1503 03.82 (P04C01)

## ANNEX TO THE EUROPEAN SEARCH REPORT
## ON EUROPEAN PATENT APPLICATION NO.

EP 24 30 6651

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | Publication date | Patent family member(s) | Publication date |
|---|---|---|---|
| WO 2023202569 A1 | 26-10-2023 | CN 119054281 A<br>TW 202345602 A<br>WO 2023202569 A1 | 29-11-2024<br>16-11-2023<br>26-10-2023 |

EPO FORM P0459

For more details about this annex : see Official Journal of the European Patent Office, No. 12/82